# EUROPÄISCHE PATENTSCHRIFT

(11) **EP 1 616 274 B1**
(45) Veröffentlichungstag und Bekanntmachung des Hinweises auf die Patenterteilung: **29.09.2010**
(21) Anmeldenummer: 04715279.8
(22) Anmeldetag: 27.02.2004
(51) Int. Cl.: G06F 17/30

(54) **VERFAHREN ZUR CODIERUNG EINES STRUKTURIERTEN DOKUMENTS**
METHOD FOR ENCODING A STRUCTURED DOCUMENT
PROCEDE DE CODAGE D'UN DOCUMENT STRUCTURE

(30) Priorität: 04.03.2003 DE 10309336
(43) Veröffentlichungstag der Anmeldung: 18.01.2006
(73) Patentinhaber: SIEMENS AKTIENGESELLSCHAFT, 80333 München (DE)
(72) Erfinder: HEUER, Jörg, 81539 München (DE); HUTTER, Andreas, 81673 München (DE); KOFLER-VOGT, Andrea, 83059 Kolbermoor (DE)
(86) Internationale Anmeldenummer: PCT/EP2004/001992
(87) Internationale Veröffentlichungsnummer: WO 2004/079589

(56) Entgegenhaltungen:
- WO-A-02/062070
- WO-A-03/001404
- NIEDENNEIER U ET AL: "An MPEG-7 tool for compression and streaming of XML data" PROC. IEEE INTERNATIONAL CONFERENCE ON MULTIMEDIA AND EXPO, Bd. 1, 26. August 2002 (2002-08-26), Seiten 521-524, XP010604420 LAUSANNE, SWITZERLAND
- GIRARDOT M ET AL: "Efficient representation and streaming of XML content over the Internet medium" PROC. IEEE INTERNATIONAL CONFERENCE ON MULTIMEDIA AND EXPO, 30. Juli 2000 (2000-07-30), Seiten 67-70, XP010511404 NEW YORK, NY, USA ISBN: 0-7803-6536-4
- "TEXT OF ISO/IEC FCD 15938-1 INFORMATION TECHNOLOGY - MULTIMEDIA CONTENT DESCRIPTION INTERFACE - PART 1 SYSTEMS" ISO/IEC JTC1/SC29/WG11 MPEG01/N4001, XX, XX, März 2001 (2001-03), Seiten 1-2,I, XP001001465 in der Anmeldung erwähnt
- GIRARDOT M. ET AL: 'Millau: an encoding format for efficient representation and exchange of XML over the Web' COMPUTER NETWORKS Bd. 33, Nr. 1-6, 23 Mai 2000, Seiten 747 - 765, XP001005949

## Beschreibung

Die Erfindung betrifft ein Verfahren zur Codierung eines strukturierten Dokuments, ein Decodierverfahren und eine entsprechende Codier- bzw. Decodiervorrichtung, bei denen eine binäre Repräsentation eines strukturierten, insbesondere XMLbasierten Dokuments (XML = Extensible Markup Language), mit Hilfe eines Schemas codiert und/oder decodiert wird.

Derartige Codier- und Decodierverfahren sind beispielsweise in Druckschriften betreffend den MPEG-7-Standard, insbesondere in Dokument [1], beschrieben. Diese Verfahren ermöglichen es, anhand von Bitmustern im codierten Datenstrom Inhalte des Dokuments, insbesondere Elemente und/oder Attribute und/oder Datentypen, zu bestimmen. Die codierten Inhalte sind hierbei in sog. FUUs (FUU = Fragment Update Unit) gespeichert, wobei nicht der gesamte Inhalt des Elements und/oder Attributs und/oder Datentyps in der FUU enthalten sein muss. Teile dieses Elements und/oder Attributs und/oder Datentyps können in späteren FUUs codiert sein.

Der Inhalt von XML-Dokumenten wird häufig bei einem Empfänger weiter verarbeitet, beispielsweise für die Anzeige aufbereitet. Hierzu werden oft aus dem XML-Dokument nur bestimmte Elemente und/oder Attribute und/oder Datentypen herausgefiltert. Der Vorgang des Filterns kann beispielsweise in einem sog. XSLT (XSLT = XML Style Sheet Language Transformation) spezifiziert werden.

Gemäß dem Stand der Technik erweist es sich in Applikationen zur Verarbeitung eines XML-Dokuments als nachteilhaft, dass zum Herausfiltern von Inhalten das gesamte Dokument aus dem Bitstrom decodiert wird und erst anschließend gefiltert wird. Die Filterung kann mit aus dem Stand der Technik bekannten Technologien dadurch beschleunigt werden, dass FUUs nicht decodiert werden, die aufgrund der im sog. Context-Pfad der FUU enthaltenen Informationen den zu filternden Inhalt nicht enthalten können. Allerdings kann anhand des Context-Pfades nicht sicher ermittelt werden, welche FUUs den gesuchten Inhalt tatsächlich enthalten.

Aus Girardot M et al: "Efficient representation and streaming of XML content over the Internet medium", Proc. 2000 IEEE International Conference on Multimedia and Expo, New York, NY, USA (2000-07-30 - 2000-02-08), Seiten 67 bis 70, XP010511404 ISBN: 0-7803-6536-4, ist ein Verfahren bekannt, mit dem sich XML-Inhalte über das Internet in effizienter Weise nutzen lassen. Hierzu wird darin vorgeschlagen, ein Format zum Encodieren zu verwenden, welches als Millau-Format bekannt ist, und eine Erweiterung des bekannten WAP Binary XML-Formates darstellt. Ein Streaming innerhalb dieser Millau-Architektur erfolgt dabei so, dass zwei Datenströme erzeugt werden, davon ist einer ein Datenstrom, der die Struktur eines XML-Dokumentes enthält, und der andere Datenstrom ein Datenstrom, welcher Multimediainhalte in die näheren komprimierten Formate, beispielsweise MPEG, enthält.

Aufgabe der Erfindung ist es deshalb, ein Verfahren zur Codierung eines strukturierten Dokuments zu schaffen, welches eine einfachere und schnellere Filterung von Inhalten aus dem Dokument ermöglicht.

Diese Aufgabe wird durch die unabhängigen Patentansprüche gelöst. Weiterbildungen der Erfindung ergeben sich aus den abhängigen Ansprüchen.

Bei dem erfindungsgemäßen Verfahren zur Codierung eines strukturierten Dokuments, insbesondere eines XML-Dokuments, werden die Inhalte des Dokuments in eine Binärdarstellung umgewandelt. Die Binärdarstellung wird in Codiereinheiten aufgeteilt, welche einen codierten Datenstrom bilden, wobei die Codiereinheiten aus dem codierten Datenstrom auslesbar sind.

Der codierte Datenstrom enthält hierbei Konfigurationsdaten, mit denen Konfigurationsinformationen betreffend die Aufteilung der Binärdarstellung in Codiereinheiten vor dem Auslesen einer oder mehrerer Codiereinheiten auslesbar sind. Es ist somit zum Herausfiltern bestimmter Inhalte aus dem Dokument nicht mehr erforderlich, den gesamten codierten Datenstrom zu decodieren, sondern bereits aus dem codierten Datenstrom kann ermittelt werden, welche Inhalte die einzelnen Codiereinheiten enthalten. Das Filtern eines strukturierten Dokuments kann somit wesentlich beschleunigt werden.

In einer bevorzugten Ausführungsform der Erfindung sind die Konfigurationsinformationen insbesondere Informationen betreffend fehlende Inhalte in vorgegebenen Codiereinheiten. Es kann somit aus dem codierten Datenstrom ermittelt werden, welche Inhalte in einer Codiereinheit fehlen, so dass eine Decodierung dieser Codiereinheit nicht durchgeführt werden muss, wenn bei der Filterung nach genau diesem fehlenden Inhalt gesucht wird.

In einer bevorzugten Ausführungsform enthält der codierte Datenstrom Referenzen auf die Stellen, an denen sich die fehlenden Inhalte im codierten Datenstrom befinden, und/oder auf die Codiereinheiten, welche die fehlenden Inhalte enthalten. Wenn sich somit bei der Filterung ergibt, dass eine bestimmte FUU den gesuchten Inhalt nicht enthält, wird sofort auf die Stellen referenziert, an denen sich der gesuchte Inhalt befindet. Die Filterung kann hierdurch nochmals wesentlich beschleunigt werden.

In einer weiteren bevorzugten Ausführungsform sind die Konfigurationsdaten im codierten Datenstrom selbst codiert, wodurch die Codiereffizienz erhöht wird.

In einer Ausgestaltung der Erfindung sind die Konfigurationsdaten die Konfigurationsinformationen, wobei diese Konfigurationsinformationen dem codierten Datenstrom hinzugefügt werden. Insbesondere können die Konfigurationsinformationen in Form eines XML-Dokuments textuell codiert sein. Alternativ können die Konfigurationsinformationen mit einem MPEG-Codierverfahren codiert werden.

In einer Ausführungsform sind die Konfigurationsdaten Referenzen auf Konfigurationsinformationen, mit denen Konfigurationsinformationen aus gespeicherten Konfigurationsinformationen ausgewählt werden. Es müssen somit nicht mehr die gesamten Konfigurationsinformationen übertragen werden, sondern diese Informationen können in einem Speicherbereich, auf den der Decoder Zugriff hat, abgespeichert sein.

Das zu codierende Dokument ist ein MPEG-Beschreibungsstrom, insbesondere ein MPEG-7- oder MPEG-21-Beschreibungsstrom, wobei die Codiereinheiten Fragment Update Units sind, die wiederum Access Units bilden. Eine Beschreibung des Codierstandards MPEG-21 befindet sich beispielsweise in Dokument [2]. Die gespeicherten Konfigurationsinformationen sind hierbei vorzugsweise in Profilen eines MPEG-Standards, insbesondere des MPEG-7- oder des MPEG-21-Standards enthalten.

In einer besonders bevorzugten Ausführungsform ist das strukturierte Dokument ein XML-Dokument, das Elemente und/oder Attribute und/oder Datentypen umfasst. Im Falle, dass die Konfigurationsinformationen Informationen betreffend fehlende Inhalte sind, umfassen die fehlenden Inhalte insbesondere mindestens ein Element und/oder ein Attribut und/oder einen Datentyp.

Neben dem oben beschriebenen Verfahren zur Codierung eines Datenstroms umfasst die Erfindung ferner ein Verfahren zur Decodierung eines codierten Datenstroms, wobei das Verfahren derart ausgestaltet ist, dass ein mit dem erfindungsgemäßen Codierverfahren codierter Datenstrom decodiert wird. Hierbei werden die Konfigurationsinformationen vorzugsweise aus dem codierten Datenstrom ausgelesen.

Darüber hinaus betrifft die Erfindung ein Verfahren zur Codierung und Decodierung eines Datenstroms, welches das oben beschriebene erfindungsgemäße Codierverfahren und das oben erwähnte erfindungsgemäße Decodierverahren umfasst.

Die Erfindung umfasst ferner eine Codiervorrichtung, welche derart ausgestaltet ist, dass das erfindungsgemäße Codierverfahren durchführbar ist, sowie eine Decodiervorrichtung, welche derart ausgestaltet ist, dass das erfindungsgemäße Decodierverfahren durchführbar ist. Darüber hinaus betrifft die Erfindung eine Codier- und Decodiervorrichtung, welche eine erfindungsgemäße Codiervorrichtung und eine erfindungsgemäße Decodiervorrichtung umfasst.

Ausführungsbeispiele der Erfindung werden nachfolgend anhand der beigefügten Zeichnungen näher erläutert.

Es zeigen:
- Figur 1: eine schematische Darstellung eines Codier- und Deco- diersystems, in dem das erfindungsgemäße Codier- und Decodierverfahren durchgeführt wird;
- Figur 2: eine schematische Darstellung des Aufbaus einer FUU;
- Figur 3: ein Beispiel einer Syntax eines XML-Dokuments, aus dem Informationen herausgefiltert werden sollen;
- Figur 4: ein Beispiel einer Filterspezifikation zum Herausfil- tern bestimmter Informationen aus der binären Reprä- sentation des XML-Dokuments der Fig. 3; und
- Figur 5: eine beispielhafte Darstellung einer im erfindungsge- mäßen Verfahren verwendbaren Encoderkonfiguration formatiert als XML Dokument.

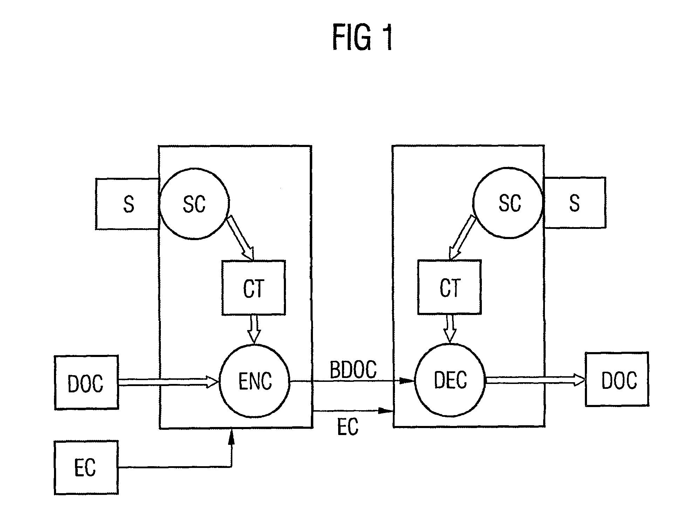

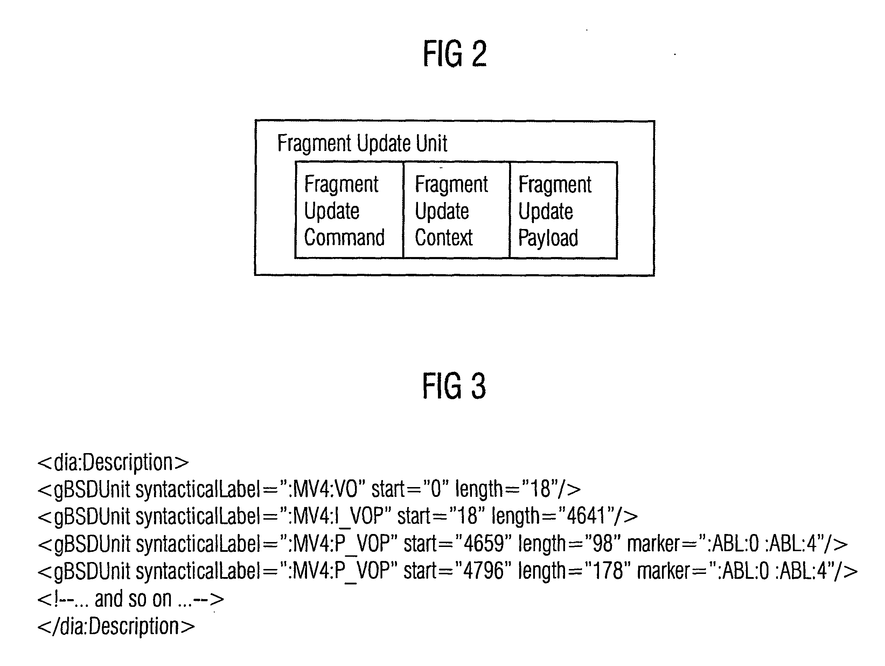

In Figur 1 ist beispielhaft ein Codier- und Decodiersystem mit einem Encoder ENC und einem Decoder DEC dargestellt, mit denen XML-Dokumente DOC codiert bzw. decodiert werden. Sowohl der Encoder als auch der Decoder verfügen beide über ein sogenanntes Schema S, in dem die zur Kommunikation genutzten Elemente und Typen des XML-Dokuments deklariert und definiert sind. Aus dem Schema S werden über entsprechende Schema-Compilationen SC im Encoder und Decoder Code-Tabellen CT erzeugt. Wenn das XML-Dokument DOC codiert wird, werden den Inhalten des XML-Dokuments über die Code-Tabellen binäre Codes zugeordnet. Anschließend werden die Codes im Encoder in sogenannte Fragment Update Units FUU aufgeteilt, die in Bezug auf Fig. 2 näher beschrieben werden. Die Aufteilung der Codes in FUUs hängt von der Konfiguration des Encoders ab. Es wird somit das Dokument DOC in ein codiertes binäres Format BDOC umumgewandelt, das anschließend an den Decoder übertragen und dort wiederum mithilfe der Code-Tabelle CT decodiert wird, so dass das Ursprungsdokument DOC wieder hergestellt wird.

Das erfindungsgemäße Verfahren zeichnet sich dadurch aus, dass vorab oder parallel zur Übertragung der Binärdarstellung des XML-Dokuments Informationen EC betreffend die vom Encoder ENC vorgenommene Aufteilung der Inhalte des XML-Dokuments in FUUs übertragen werden.

In Figur 2 sind die Komponenten einer Fragment Update Unit FUU gezeigt, welche das binäre Format eines MPEG-7 Beschreibungsstrom darstellt. Eine solche Unit enthält einen Fragment Update Command, in dem spezifiziert ist, welche Operation in einem Knoten des Beschreibungsbaums eines XML-Dokuments vorgenommen werden soll. Ferner umfasst die Unit einen Fragment Update Context , der unter anderem einen sog. Kontext-Pfad enthält, mit dem der Pfad im Beschreibungsbaum des Dokuments zu dem Knoten spezifiziert wird, an dem der Fragment Update Command ausgeführt werden soll. Durch den Kontextpfad wird festgelegt, welche Informationen maximal in einer FUU enthalten sein können. Schließlich enthält die FUU noch die Fragment Update Payload, d.h. die in dem entsprechenden Knoten zu verarbeitende codierte Information. Zur genaueren Beschreibung des Aufbaus einer FUU sei auf das Dokument [3] verwiesen. Ein codierter Datenstrom umfasst eine Vielzahl solcher Fragment Update Units, wobei diese FUUs wiederum zu sog. Access Units zusammengefasst sind. In dem erfindungsgemäßen Verfahren werden in dem codierten Datenstrom neben den FUUs auch noch Konfigurationsinformationen EC zum Decoder übermittelt, die spezifizieren, wie ein XML-Dokument in FUUs aufgeteilt worden ist.

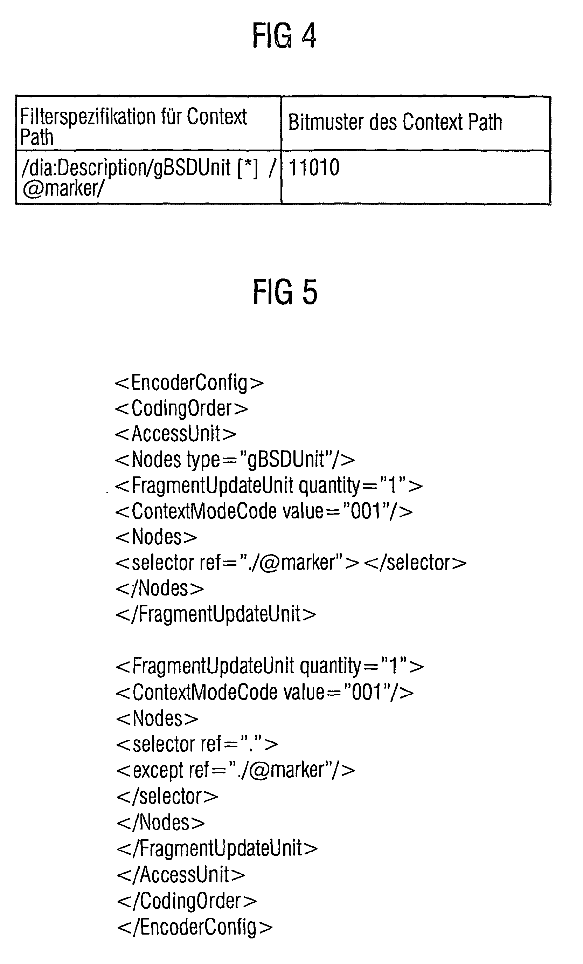

In Fig. 3 ist ein Beispiel eines Inhalts eines zu codierenden XML-Dokuments wiedergegeben. Das Dokument umfasst u.a. vier als "gBSDUnit" bezeichnete Elemente, wobei zwei dieser Elemente ein sog. Marker-Attribut enthalten. In Fig. 4 ist eine Filterspezifikation dargestellt, gemäß der das mit dem erfindungsgemäßen Verfahren codierte Dokument aus Fig. 3 gefiltert werden soll. Die Filterspezifikation legt fest, dass nach einem Kontextpfad zu suchen ist, der das Element gBDSUnit mit dem Marker-Attribut enthält. Diese Spezifikation entspricht im vorliegenden Fall dem Bitmuster "11010".

Um diese Information mit möglichst wenig Decodieraufwand aus dem codierten Datenstrom herauszufiltern, wird an den Decoder die in Fig. 5 im XML-Format dargestellte Konfigurationsinformation des Encoders übermittelt. Hierin wird spezifiziert, dass eine Access Unit nur gBSDUnits enthält (Zeile 4: <Nodestype="gBSDUnit"/>). Ferner wird festgelegt, dass eine Access Unit zwei Fragment Update Units enthält, wobei die erste Fragment Update Unit jeweils ein Marker-Attribut einer gBSDUnit enthält (Zeile 8: <selector ref="./@marker"></selector) und die zweite Fragment Update Unit jeweils eine gBSDUnit enthält, wobei bei den gBSDUnits, welche Marker-Attribute enthalten, diese Attribute nicht in dieser Fragment Update Unit gespeichert sind (Zeile 16: <except ref="./@marker"/>). Durch Übermittlung der in Fig. 5 dargestellten Informationen an den Decoder DEC kann eine Suche nach bestimmten Marker-Attributen wesentlich schneller durchgeführt werden, da:
- dem Decoder bekannt ist, dass Marker-Attribute nicht in FUUs enthalten sind, die gBSDUnits enthalten, und die in den Fragment Update Payloads enthaltenen gBSDUnits hierzu nicht decodiert werden müssen,
- der Decoder nur FUUs decodieren muss, dessen Context-Pfad (siehe Figur 4) das Bitmuster eines Context-Pfades zu einem Marker-Attribut aufweist.

Da der Vergleich von Bitmustern wesentlich schneller durchgeführt werden kann als die Decodierung von Fragment Update Payloads, kann durch die Übertragung von der Konfigurationsinformationen des Encoders die Filterung deutlich beschleunigt werden.

### Literaturverzeichnis:

[1] Text of ISO/IEC FCD 15938-1 Information Technology - Multimedia Content Description Interface - Part1, Systems
[2] Text of ISO/IEC CD 21000-7 Information Technology - Multimedia Framework - Part 7, Digital Item Adaptation
[3] J. Heuer, C. Thienot, M. Wollborn, "Binary Format", in "Introduction to MPEG-7", Editors: B. S. Manjunath, P. Salembier, T. Sikora, John Wiley & Sons, West Sussex, 2002, S. 61-80.

## Patentansprüche

1. Verfahren zur Codierung eines strukturierten Dokuments (DOC), insbesondere eines XML-Dokuments, bei dem
- die Inhalte des Dokuments (DOC) in eine Binärdarstellung umgewandelt werden;
- die Binärdarstellung in Codiereinheiten (FUU) aufgeteilt wird, welche einen codierten Datenstrom (BDOC) bilden und aus dem codierten Datenstrom (BDOC) auslesbar sind;
- das Dokument (DOC) ein MPEG-Beschreibungsstrom ist, insbesondere ein MPEG7- oder MPEG-21-Beschreibungsstrom, wobei die Codiereinheiten Fragment Update Units sind, die wiederum Access Units bilden **gekennzeichnet dadurch, daß**
- der codierte Datenstrom Konfigurationsdaten enthält, mit denen Kofigurationsinformationen (EC) betreffend die Aufteilung der Binärdarstellung in Codiereinheiten (FUU) vor dem Auslesen einer oder mehrerer Codiereinheiten (FUU) auslesbar sind.

2. Verfahren nach Anspruch 1, bei dem die Konfigurationsinformationen (EC) Informationen betreffend fehlende Inhalte in vorgegebenen Codiereinheiten enthalten.

3. Verfahren nach Anspruch 2, bei dem der codierte Datenstrom (BDOC) Referenzen auf die Stellen, an denen sich die fehlenden Inhalte im codierten Datenstrom (BDOC) befinden, und/oder auf die Codiereinheiten, welche die fehlenden Inhalte enthalten, enthält.

4. Verfahren nach einem der vorhergehenden Ansprüche, bei dem die Konfigurationsdaten codiert werden.

5. Verfahren nach einem der vorhergehenden Ansprüche, bei dem die Konfigurationsdaten die Konfigurationsinformationen (EC) sind und dem codierten Datenstrom (BDOC) hinzugefügt werden.

6. Verfahren nach Anspruch 5, bei dem die Konfigurationsinformationen (EC) in Form eines XML-Dokuments textuell codiert werden.

7. Verfahren nach Anspruch 5, bei dem die Konfigurationsinformationen (EC) mit einem MPEG-Codierverfahren codiert werden.

8. Verfahren nach einem der Ansprüche 1 bis 5, bei dem die Konfigurationsdaten Referenzen auf Konfigurationsinformationen (EC)sind, mit denen Konfigurationsinformationen aus gespeicherten Konfigurationsinformationen ausgewählt werden.

9. Verfahren nach einem der Ansprüche 1 bis 8, bei dem die gespeicherten Konfigurationsinformationen (EC) in Profilen eines MPEG-Standards, insbesondere des MPEG-7 oder des MPEG-21-Standards, enthalten sind.

10. Verfahren nach einem der vorhergehenden Ansprüche, bei dem das strukturierte Dokument ein XML-Dokument ist, das Elemente und/oder Attribute und/oder Datentypen umfasst.

11. Verfahren nach Anspruch 2 und 10, bei dem die fehlenden Inhalte mindestens ein Element und/oder ein Attribut und/oder einen Datentyp umfassen.

12. Verfahren zur Decodierung eines codierten Datenstroms, wobei das Verfahren derart ausgestaltet ist, dass ein mit einem Verfahren der vorhergehenden Ansprüche codierter Datenstrom (BDOC) decodiert wird.

13. Verfahren nach Anspruch 12, bei dem die Konfigurationsinformationen (EC) ausgelesen werden.

14. Verfahren zur Codierung und Decodierung eines Datenstroms, umfassend ein Verfahren nach einem der Ansprüche 1 bis 11 und ein Verfahren nach Anspruch 12 oder 13.

15. Codiervorrichtung, welche derart ausgestaltet ist, dass ein Verfahren nach einem der Ansprüche 1 bis 11 durchführbar ist.

16. Decodiervorrichtung, welche derart ausgestaltet ist, dass ein Verfahren nach Anspruch 12 oder 13 durchführbar ist.

17. Codier- und Decodiervorrichtung, umfassend die Codiervorrichtung nach Anspruch 15 und die Decodiervorrichtung nach Anspruch 16.

## Claims

1. Method for encoding a structured document (DOC), in particular an XML document, in which
- the contents of the document (DOC) are converted into a binary representation;
- the binary representation is divided into encoding units (FUU), which form an encoded data flow (BDOC) and can be read out from the encoded data flow (BDOC);
- the document (DOC) is an MPEG description flow, in particular an MPEG-7 or MPEG-21 description flow, with the encoding units being fragment update units, which in turn form access units, **characterised in that**
- the encoded data flow contains configuration data, by means of which configuration information (EC) concerning the division of binary representation into encoding units (FUU) can be read out prior to reading out one or more encoding units (FUU).

2. Method according to claim 1, with which the configuration information (EC) contains information concerning missing contents in predetermined encoding units (FUU).

3. Method according to claim 2, with which the encoded data flow (BDOC) contains references to the locations at which the missing contents are located in the encoded data flow (BDOC), and/or to the encoding units (FUU) containing the missing contents.

4. Method according to one of the preceding claims, with which the configuration data is encoded.

5. Method according to one of the preceding claims, with which the configuration data is the configuration information (EC) and is added to the encoded data flow (BDOC)

6. Method according to claim 5, with which the configuration information (EC) is textually encoded in the form of an XML document.

7. Method according to claim 5, with which the configuration information (EC) is encoded with an MPEG encoding method.

8. Method according to one of claims 1 to 5, with which the configuration data consists of references to configuration information (EC), with which configuration information is selected from stored configuration information.

9. Method according to claim 1 to 8, with which the stored configuration information (EC) is contained in profiles of an MPEG standard, in particular of the MPEG-7 or the MPEG-21 standard.

10. Method according to one of the preceding claims, with which the structured document is an XML document comprising elements and/or attributes and/or data types.

11. Method according to claim 2 and 10, with which the missing contents comprise at least one element and/or one attribute and/or one data type.

12. Method for decoding an encoded data flow, with which the method is configured such that a data flow (BDOC) encoded with a method according to the preceding claims is decoded.

13. Method according to claim 12, with which the configuration information (EC) is read out.

14. Method for encoding and decoding a data flow, comprising a method according to one of claims 1 to 11 and a method according to claim 12 or 13.

15. Encoding device, which is designed such that a method according to one of claims 1 to 11 can be implemented.

16. Decoding device, which is designed such that a method according to claim 12 or 13 can be implemented.

17. Encoding and decoding device, comprising the encoding device according to claim 15 and the decoding device according to claim 16.

## Revendications

1. Procédé de codage d'un document structuré (DOC), en particulier d'un document XML, dans lequel
- les contenus du document (DOC) sont convertis en une représentation binaire ;
- la représentation binaire est répartie en unités de codages (FUU) qui forment un flux de données codé (BDOC) et peuvent être lues hors du flux de données codé (BDOC) ;
- le document (DOC) est un flux de description MPEG, et plus particulièrement un flux de description MPEG-7 ou MPEG-21, les unités de codage étant des Fragment Update Units qui constituent pour leur part des Access Units,
**caractérisé en ce que**
le flux de données codé contient des données de configuration avec lesquelles des informations de configuration (EC) concernant la répartition de la représentation binaire en unités de codage (FUU) peuvent être lues avant la lecture d'une ou de plusieurs unités de codage (FUU).

2. Procédé selon la revendication 1, dans lequel les informations de configuration (EC) contiennent des informations relatives à des contenus manquants dans des unités de codage données.

3. Procédé selon la revendication 2, dans lequel le flux de données codé (BDOC) contient des références aux endroits auxquels les contenus manquants se trouvent dans le flux de données codé (BDOC) et/ou aux unités de codage qui contiennent les contenus manquants.

4. Procédé selon l'une des revendications précédentes, dans lequel les données de configuration sont codées.

5. Procédé selon l'une des revendications précédentes, dans lequel les données de configuration sont les informations de configuration (EC) et sont ajoutées au flux de données codé (BDOC).

6. Procédé selon la revendication 5, dans lequel les informations de configuration (EC) sont codées textuellement sous la forme d'un document XML.

7. Procédé selon la revendication 5, dans lequel les informations de configuration (EC) sont codées au moyen d'un procédé de codage MPEG.

8. Procédé selon l'une des revendications 1 à 5, dans lequel les données de configuration sont des références à des informations de configuration (EC) avec lesquelles des informations de configuration sont sélectionnées à partir d'informations de configuration stockées.

9. Procédé selon l'une des revendications 1 à 8, dans lequel les informations de configuration stockées (EC) sont contenues dans des profils d'un standard MPEG, et plus particulièrement du standard MPEG-7 ou du standard MPEG-21.

10. Procédé selon l'une des revendications précédentes, dans lequel le document structuré est un document XML qui comprend des éléments et/ou des attributs et/ou des types de données.

11. Procédé selon la revendication 2 et 10, dans lequel les contenus manquants comprennent au moins un élément et/ou un attribut et/ou un type de données.

12. Procédé de décodage d'un flux de données codé, le procédé étant conçu de manière telle qu'un flux de données (BDOC) codé au moyen d'un procédé selon les revendications précédentes est décodé.

13. Procédé selon la revendication 12, dans lequel les informations de configuration (EC) sont lues.

14. Procédé de codage et de décodage d'un flux de données, comprenant un procédé selon l'une des revendications 1 à 11 et un procédé selon la revendication 12 ou 13.

15. Dispositif de codage conçu de manière telle qu'un procédé selon l'une des revendications 1 à 11 peut être exécuté.

16. Dispositif de décodage conçu de manière telle qu'un procédé selon la revendication 12 ou 13 peut être exécuté.

17. Dispositif de codage et de décodage, comprenant le dispositif de codage selon la revendication 15 et le dispositif de décodage selon la revendication 16.
